# EUROPEAN PATENT APPLICATION

(11) **EP 2 518 680 A1**
(43) Date of publication of application: **31.10.2012**
(21) Application number: 12165604.5
(22) Date of filing: 26.04.2012
(51) Int. Cl.: G06Q 30/02, H04W 4/02

(54) **Location based consumer profiling**

(30) Priority: 28.04.2011 US 201161480000 P
(71) Applicant: RapidBlue Solutions Oy, 00120 Helsinki (FI)
(72) Inventor: Weigh, Gavin, 00530 Helsinki (FI); Hohteri, Harri, 00150 Helsinki (FI)
(74) Representative: Lamberg, Samu Petteri

(57) **Abstract**

A system and method for profiling a consumer includes receiving a detailed visit record information element where the visit record information element has information about a location visited by a consumer and a unique consumer identifier. The method includes retrieving location characterization information associated with the location and retrieving a consumer profile associated with the unique consumer identifier. An updated consumer profile based at least in part on one or more of the consumer profile, the detailed visit record, and the location characterization information is generated, and the updated consumer profile is stored.

## Description

### BACKGROUND

### Field

The aspects of the present disclosure relate generally to generation of consumer profiles, and in particular to using location information to aid generation of customer profiles.

### Description of Related Art

The internet has provided an efficient means of collecting and analyzing information about a consumer's behavior as an aid to creation of consumer profiles. Consumer profiles are valuable to advertisers who can use them to create targeted advertising campaigns. Profiles of consumers who frequently visit a location are also valuable when evaluating real-estate for both commercial and residential purposes. Typically, data for consumer profiles is gathered by having consumers fill out forms, either over the internet, over the phone, or by mail, etc., or by gathering data from other consumer activities such as surfing the web and making purchases. For example, a consumer's web usage can be tracked by monitoring the pages they visit using tracking cookies. Information about web usage such as sites visited, items purchased, etc., can then be uploaded to a consumer profiling system for analysis and creation of profiles. All these methods of gathering consumer information rely on certain actions being undertaken by the consumer. Thus, any update of consumer profiles must wait for the consumer to do something, and can only be based on overt actions by the consumer.

Consumer profiling based on a consumer's actions, such as using cashier receipts generated from purchases, is disclosed in US Patent Number 6,298,348. This type of consumer profile contains both demographic data as well as product preferences. Purchase records are transmitted to the consumer profiling system which then updates consumer profiles based on product characterizations. These product characterizations include demographic profiles of a typical purchaser of that product as well as specific product details such as brand and size.

These prior art methods have limitation such as the need for a consumer to take an action, such as watching a program, making a purchase, or filling in a form. It would however, be beneficial to have a means of updating consumer profiles without waiting for the consumer to take overt actions.

With recent advances in wireless and handheld devices many consumers carry a wireless device with them nearly all the time. These devices are usually connected to a network such as a cellular service, wireless LAN, or wireless point-to-point links such as BLUETOOTH^{™}. Many of these networks can be used to track and obtain location information from consumers without any actions on their part. For example, BLUETOOTH^{™} devices use unique identification numbers associated with each hardware device to establish communications with other devices. It is possible to collect these unique identification numbers along with other data such as location information and radio signal strength from BLUETOOTH^{™} enabled mobile devices, such as mobile phones, or from stationary BLUETOOTH^{™} devices such as base stations. It would be desirable to be able to automatically collect this information for use by a consumer profiling system without requiring consumer actions.

Accordingly, it would be desirable to provide consumer profiling methods and systems that solve at least some of the problems identified above.

### SUMMARY OF THE INVENTION

As described herein, the exemplary embodiments overcome one or more of the above or other disadvantages known in the art. Aspects of the disclosed embodiments provide systems and methods for automated collection of location and movement information related to a consumer. This data is used to describe the demographics and consumer behavior of the consumer without requiring any overt action on the part of the consumer, for example such overt actions may include buying an item, answering questionnaires, filling out online forms, etc.

One aspect of the present disclosure relates to a system according to appended claim 1.

Another aspect of the present disclosure relates to a method for profiling a consumer, the method includes receiving a detailed visit record information element, where the visit record information element has information about a location visited by a consumer and a unique consumer identifier. The method continues by retrieving location characterization information associated with the location and retrieving a consumer profile information element associated with the unique consumer identifier. An updated consumer profile information element based at least in part on one or more of the consumer profile information element, the detailed visit record information element, and the location characterization information is generated, and the updated consumer profile information element is stored.

Another aspect of the present disclosure relates to a method for characterizing a location, the method includes receiving a detailed visit record information element where the visit record information element has information about a location visited by a consumer and a unique consumer identifier. The method continues by retrieving a consumer profile information element associated with the consumer and retrieving a location characterization information element associated with the location. An updated location characterization information element based at least in part on one or more of the consumer profile information element, the detailed visit record information element, and the location characterization information is generated, and the updated location characterization information element is stored.

Another aspect of the present disclosure relates to a computer program product comprising computer readable code means, the computer readable code means when executed in a processor device being configured to cause performing of the method of any aspect or embodiment of the present disclosure.

Another aspect of the present disclosure relates to a computer program product according to appended claim 10.

These and other aspects and advantages of the exemplary embodiments will become apparent from the following detailed description considered in conjunction with the accompanying drawings. It is to be understood, however, that the drawings are designed solely for purposes of illustration and not as a definition of the limits of the invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the drawings:

Figure 1 illustrates a user relation diagram of a consumer profiling system incorporating aspects of the present disclosure.

Figure 2 illustrates a user relation diagram of an internet based consumer profiling system incorporating aspects of the present disclosure.

Figure 3 illustrates a probabilistic consumer demographic characterization vector incorporating aspects of the present disclosure.

Figure 4 illustrates a deterministic consumer demographic characterization vector incorporating aspects of the present disclosure.

Figure 5 illustrates a consumer behavior characterization vector incorporating aspects of the present disclosure.

Figure 6 illustrates an embodiment of a data structure for storing a consumer profile incorporating aspects of the present disclosure.

Figure 7 illustrates a location demographics vector and a location behavior vector incorporating aspects of the present disclosure.

Figure 8 illustrates a context diagram of a consumer profiling system incorporating aspects of the present disclosure.

Figure 9 illustrates pseudocode for an embodiment of location based data processing algorithm as may be used in the consumer profiling system incorporating aspects of the present disclosure.

Figure 10 illustrates pseudocode for an embodiment of a friendly name based data processing algorithm as may be used in the consumer processing system incorporating aspects of the present disclosure.

Figure 11 shows a flow chart illustrating a method for updating the consumer DC vector and consumer BC vector incorporating aspects of the present disclosure.

Figure 12 shows a flow chart illustrating a device discovery process incorporating aspects of the present disclosure.

### DETAILED DESCRIPTION OF THE DISCLOSED EMBODIMENTS

Reference will now be made to the various embodiments, one or more examples of which are illustrated in the drawings. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

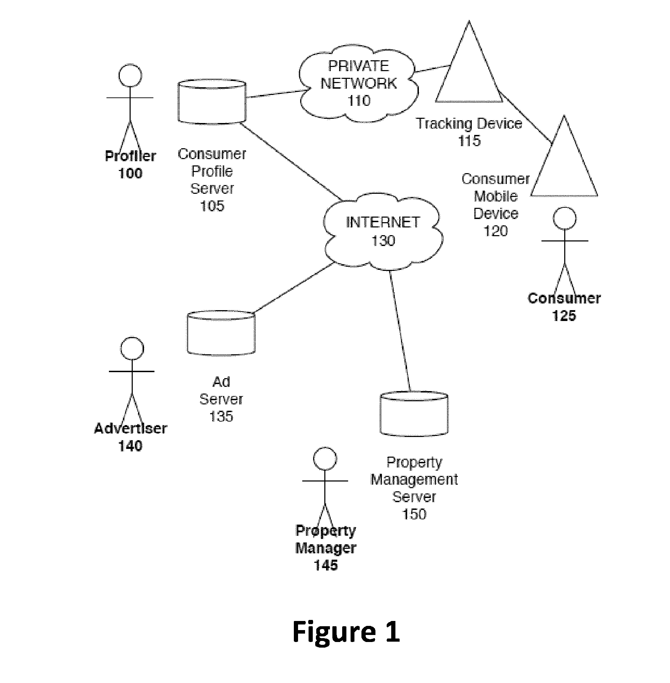

Referring to Figure 1, an illustration of a user relationship diagram showing exemplary relationships between a consumer profiling system and various other entities can be seen. A Profiler 100, which in one embodiment is an agent or person desiring to receive consumer profile information, can receive consumer profile information and information elements or data from a consumer profile server 105. In one embodiment, the profiler 100 is in communication with the server 105, which can also comprise a controller, via any type of wired or wireless connection or coupling. In the embodiment where the profiler 100 is an agent, the agent generally includes, is coupled to or is in communication with a processor that is operable to receive and monitor the profile information. In one embodiment, the agent, in this embodiment the profiler 100, is comprised of machine-readable instructions that are executable by a processing device.

The server 105, or other such "server" as that term is generally used herein, generally comprises a computer system with a processor, memory, and input/output devices, which includes program code to perform particular tasks and/or data manipulations, and is typically connected to a local or wide area network. The memory typically comprises both non-volatile memory, such as semiconductor type random access memory, and non-volatile memory such as a magnetic computer disk. In this embodiment, the consumer profile server 105 is configured or programmed to collect consumer data over a private network 110, calculate and assemble the desired consumer profile information, and make the consumer profile information available to the profiler 100. In one embodiment, the consumer data is collected in, converted into or both, the form of information elements, which can be acted on, stored, or both, by the consumer profile server 105. Information elements, as that term is used herein, generally refers to data, in a suitable data format, that can be processed by a computer, server or processor. The profiler 100 is interested in the consumer profile and interacts with the consumer profiling system 105 through a user interface or over a network to view, manipulate or maintain, or otherwise interact with the consumer profile data. The private network 100 can be any type of local computer network that is logically isolated from the generally available internet 130. The consumer profile server 105 collects consumer data from one or more tracking devices 115, which scan various radio frequencies to identify consumer mobile devices 120 carried by a consumer 125. The mobile devices 120 can be any device enabled for wireless communication such as a mobile phone, smart phone, tablet computer, laptop computer or similar device equipped for mobile communication over a cellular network or other wireless network.

An Advertiser 140 is an entity, such as for example an agent as generally defined above, desiring advertising information, can combine advertisement information with consumer profile information using an ad server 135. In one embodiment, the advertisement information is in the form of information elements and data. The ad server 135 can access consumer profile data and information elements maintained by the consumer profile server 105 over the internet 130 and combine it with advertisement information to create correlations between consumer profile data and other advertisement data available on the ad server 135. The consumer profile data can include demographic information about a particular consumer such as gender etc., and can also include behavior information such as dwell time, i.e. the time a consumer spends at a particular location.

Advertiser 140 maintains, or is communicatively coupled to an ad server 135 which contains a variety of advertisements in the form of still video or picture images, video advertisements, audio advertisements, internet advertisements, or combinations thereof. In one embodiment, the advertisements, or advertisement information elements, are stored in a suitable data format for use by the ad server 135. These advertisements could then be automatically sent to a mobile device based on consumer profile information obtained from the consumer profile server 105. For example, if a consumer profile indicates that a person, or the mobile device they carry, has visited a certain store numerous times in the past, data in in the form of a sale flyer could be automatically sent to the device when it enters the store.

Consumer profile information is also valuable to property managers 145. In one embodiment, the property managers 145 are agents, as generally defined herein. For example, a retail location that is visited by a large number of consumers that ski and have high incomes could be shown to sports equipment businesses, and priced appropriately. The property manager 145 can use, or be communicatively coupled to, a property management server 150 to create correlations between the consumer profile data available on the consumer profile server 105, such as for example visit frequency, with other property information to determine for example the property rental pricing. In this context probabilistic profiling data can be advantageously used without the need for any deterministic consumer information. For example, knowing where a particular mobile device goes and how long it spends at particular locations is valuable without knowing specific information about who is carrying that particular mobile device. In one embodiment, this data and information is suitable stored in a memory or other data base associated with, included in, or both, the property management server 150.

The profiler 100 maintains the consumer profile data, which contains characterizations of the consumer 125, on the consumer profile server 105. In one embodiment, the characterizations can be in the form of unique elements or data, where each element corresponds to a particular characterization. For example, a data element or value of 1 can be used to identify one particular characterization, while a data element of 2 identifies another. In alternate embodiments, any suitable system can be used to characterize the consumer 125, other than include numerical values or data. The data can be stored in a database, such as a relational database, for example. The consumer profiling system 105 is operated by the profiler 100, which can use the profile server 105 or other computing devices connected to the consumer profile server 105 to profile a consumer 125.

Data for profiling the consumer 125 is received from a tracking device 115. The tracking device 115 can be a wireless base station, such as a BLUETOOTH base station, a mobile device, such as for example a BLUETOOTH enabled phone 120, or can be any computer or other device capable of measuring the strength of radio signals. In one embodiment, data from the tracking device 115 is transferred over a private network 110, such as a wired or wireless local area network within a store or a wide area network connecting a number of locations. Alternatively, the data from tracking device 115 is transmitted over the internet 130 to the consumer profile server 105 where it can be accessed and manipulated by the profiler 100.

In one embodiment, the profiler 100, or agent of the profiler 100, may be a retailer who collects data from its stores, or a third party who contracts with an advertiser 140 to receive radio signal strength indication (RSSI) data. The agent, retailer or other party can then use the consumer profile server 105 to process the RSSI data to create detailed visit records and visit record information elements that may be used to create a profile of the consumer 125, generally in the form of a consumer profile information element. A detailed visit record holds information about a location visited by a consumer and may include items such as a location, date and time, length of time spent at the location, i.e. dwell time, etc. Tracking information is available whenever a mobile device communicates with a tracking device 115, thus the consumer 125 does not need to take any particular action or agree to being tracked. Also, the identity of the consumer 125 can be protected by preventing any individual identifying information from being transmitted along with the RSSI data. Tracking of the mobile device 120 can be triggered by a number of various events such as a device entering into a certain location as may be defined by Global Positioning System (GPS) coordinates, the device connecting to a particular BLUETOOTH or other wireless network, or on a time interval.

Consumer profile server 105 can contain a consumer profile, which may be determined from a BLUETOOTH media access control (MAC) address or by a friendly name associated with the consumer 125 or the mobile device 120. Every BLUETOOTH enabled device is assigned a unique 48-bit number known as a MAC address. These MAC addresses are used by the network to route data to and from a particular device and are not typically shown in inquiries. Because MAC addresses are often difficult to obtain, other more human friendly names are typically used. These so called "friendly names" are typically set by the manufacturer of a BLUETOOTH device to indicate the device model and manufacturer. However, the friendly name can be set by the user and often contain a person's actual name. Recent legislation and other regulatory requirements may place strict limits on collection and use of friendly names. Thus, consumer characterization information obtained using a tracking device 115 contains demographic and consumer behavior data related to locations visited by a consumer 125 but may or may not contain specific information about the individual obtained through use of the friendly name or other identifying data.

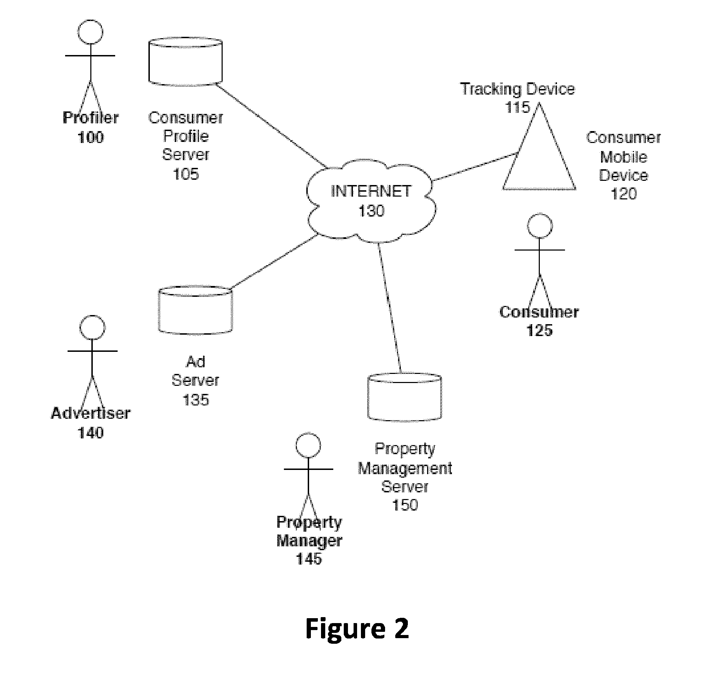

Figure 2 illustrates a relationship diagram showing an alternate embodiment of a consumer profiling system where similar to the system in Figure 1, the consumer's mobile device 120 operates as or in conjunction with a tracking device 115 to collect location information pertaining to the consumer 125. In the embodiment of Figure 2, the internet 130 is used for all data communication and no private network 110 is required.

Information about characteristics of a consumer can be stored in data records referred to as demographic characterization (DC) vectors. These DC vectors can contain probabilistic data, such as information estimated by gathering location information from a mobile device, or they can contain deterministic information, such as information known about a particular person, for example their gender. When a DC contains probabilistic information it is referred to as a probabilistic demographic characterization (PDC) vector and when a DC contains deterministic information it is referred to as a deterministic demographic characterization (DDC) vector. A DC can also contain both probabilistic and deterministic information.

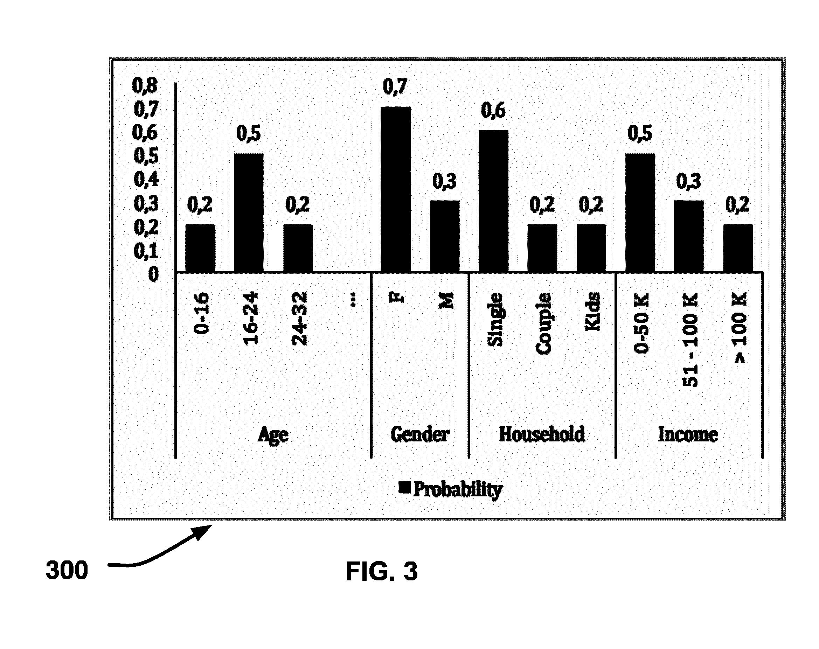

Figure 3 illustrates an example of a probabilistic demographic characterization (PDC) vector 300. The fields or values stored in the PDC vector are grouped into a number of categories where each category represents a particular demographic attribute of the consumer. In the embodiment illustrated in Figure 3 the categories include age, gender, household, and income. However, the categories used may vary and can include any type of demographic categorization desired. Each field or value in the PDC vector contains a value representing the probability that a consumer falls within the demographic grouping represented by the field. Those skilled in the art will readily recognize that many other demographic categories can be used and that the fields or values in each category can be made as narrow or broad as desired without straying from the spirit and scope of the present disclosure. The probability that the consumer falls within a particular range for each item is stored as a probability value. In the illustrated embodiment the stored probability value is a number between zero and one, with higher values indicating a greater level of confidence that the consumer is in a range or category. The values in a PDC vector may be estimated from collected location information without having any actual information about the person carrying the mobile device. Location characterization information such as the type of store or type of products sold at a location can be used to estimate demographic characteristics of consumers visiting that store. This characterization information can also be converted into and used as information elements. For example, if a particular mobile device, associated with the PDC vector, spends a large amount of time in a women's clothing store known to carry low priced clothing targeted at young adults, a PDC vector 300 as shown in figure 3 may be generated.

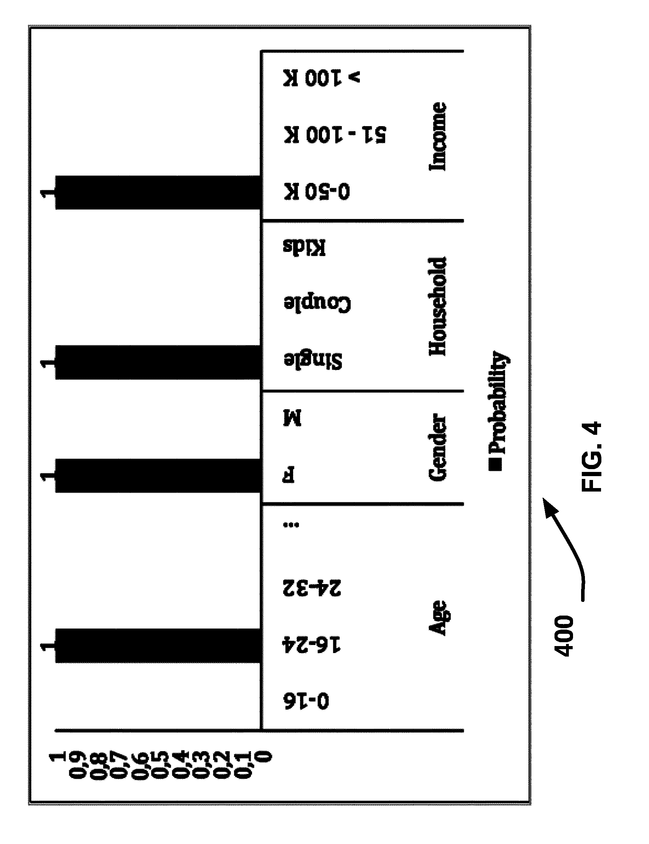

Figure 4 illustrates an example of a DDC vector 400. The DDC vector is a representation of the consumer profile as determined from deterministic rather than probabilistic data. Deterministic data can be obtained for example when a consumer 125 agrees to answer specific questions regarding age, gender, household size, income, interests, etc. If the answers or data obtained is presumed to be correct the probability value of the known characteristic is set to one, indicating 100 percent confidence that the consumer exhibits the attribute indicated by the field, and all other fields associated with that category are set to zero, indicating the consumer does not exhibit the associated attribute. For example, if a consumer is known to be 23 years old, the probability value of the 16-24 field is set to one and the probability value of the other fields associated with the age category, 0-16, 24-3, ... , are set to zero. Alternatively, if data is available indicating that answers to a particular question may be inaccurate, the associated fields in the DC vector may be set to a value between zero and one resulting in a DC vector that contains both deterministic as well as probabilistic data.

By using the same format for both PDC vectors and DDC vectors it becomes possible to easily update a consumer profile from combined probabilistic and deterministic sources. For example, the probabilistic characterization data gathered, or estimated, from location data can be combined with deterministic data received from answers to survey questions to create a demographic characterization (DC) vector containing both deterministic and probabilistic data values. In another example, when populating an item in the vector containing a phone model, a model designation based on a BLUETOOTH MAC address is deterministic while a phone model obtained from the friendly name, which can be modified by the consumer, is probabilistic. Either or both sources of information may be used to determine the model of a consumer's phone and the probability value stored in the DC record set according to the quality of the underlying data used.

A DC vector, which can be either a PDC, DDC, or a combination of both types, can include interest categories indicating various interests of the consumer, for example origami, taxidermy, motocross etc. In a one embodiment, consumer 125 answers specific questions in a survey generated by a profiler 100 and administered to consumers to obtain deterministic interest information. The questions can be administered over the phone, internet, via the mobile device, or physical mail, etc. The questions can correspond directly to the elements in the DC vector or can be processed to obtain the results to be stored in the DC vector.

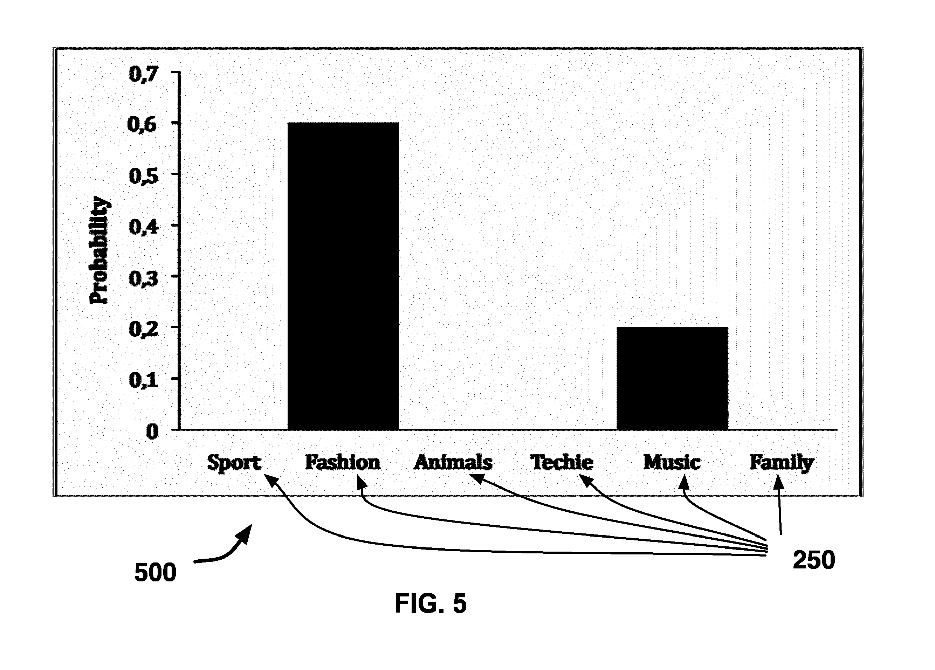

Figure 5 illustrates an exemplary behavior characterization (BC) vector 500 for a consumer. The consumer BC vector 500 represents probabilistic consumer preferences based on averages of locations visited by a consumer as determined by tracking a mobile device. For example, a consumer who visits a movie theatre, a night club for young people, and goes to a young person's fashion clothing store twice a week might have a consumer BC vector as illustrated in Figure 5. A consumer BC vector is not limited to the exemplary behavior categories 250 shown in the example consumer BC vector 500. Alternatively, any behavior categories 250 useful to an advertiser 140, profiler 100, or property manager 145 may be advantageously used.

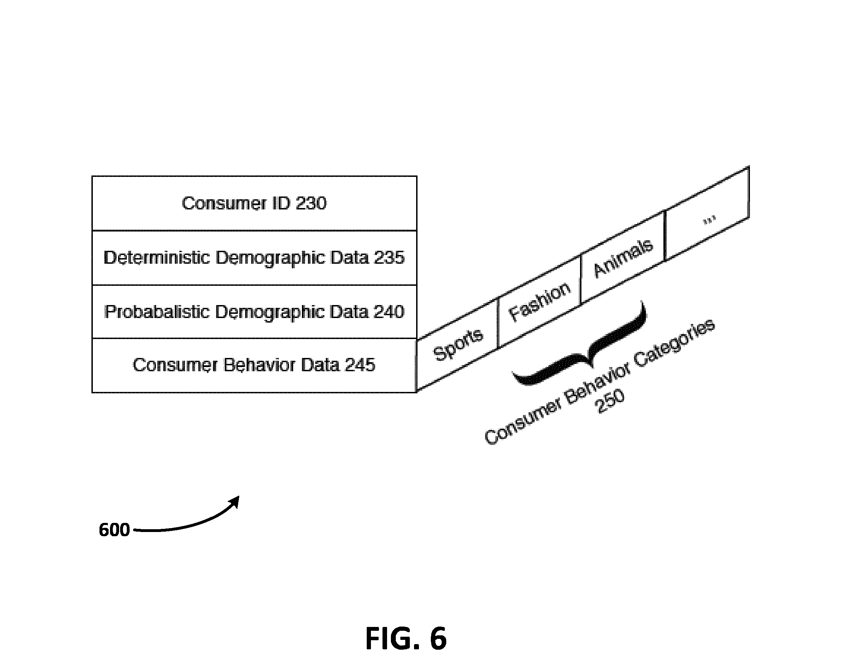

An embodiment of a data structure 600 for storing a consumer profile is illustrated in Figure 6. The data structure 600 may include a consumer ID 230 field, a deterministic demographic data 235 field, a probabilistic demographic data 240 field, and one or more consumer behavior data 245 fields. The consumer behavior data 245 field can include a consumer BC vector 500 that includes a set of consumer behavior categories 250. The consumer ID 230 is a unique identifier for a particular consumer profile 600. In certain embodiments the consumer ID 230 may be the BLUETOOTH MAC address of the mobile device or it may be an International Mobile Subscriber Identity (IMSI) number. In further embodiments the consumer ID 230 may be any unique identifier arbitrarily assigned by the profile server 105. Other alternatives for consumer ID 230 include the use of consumer identifying information such as a consumer's full name, consumer address, and/or social security number, etc. Alternatively, the data structure 600 may contain a single DC vector containing both deterministic and probabilistic data as discussed above.

Any known type of data structures may be used to store the consumer profile information such as the information shown in the illustrative data structure 600, and the data fields it contains. For example data structures such as tables, linked tabled, linked lists, stacks etc. may be advantageously used and stored in any useful type of data storage including for example relational databases, flat files, active directories, etc. In certain embodiments, data structure 600 may be stored in non-volatile computer readable media using a relational database management program or other suitable computer program.

The vectors and data structures described above form consumer characterization vectors that can be of varying length and dimension, and portions of the characterization vector can be used individually. Vectors can also be concatenated or summed to produce longer vectors which provide a more detailed profile of a consumer 125. A matrix representation of the vectors can be used, in which specific elements, such as a behavior categories 250, are indexed. Hierarchical structures can be employed to organize the vectors and to allow hierarchical search algorithms to be used to locate portions of vectors.

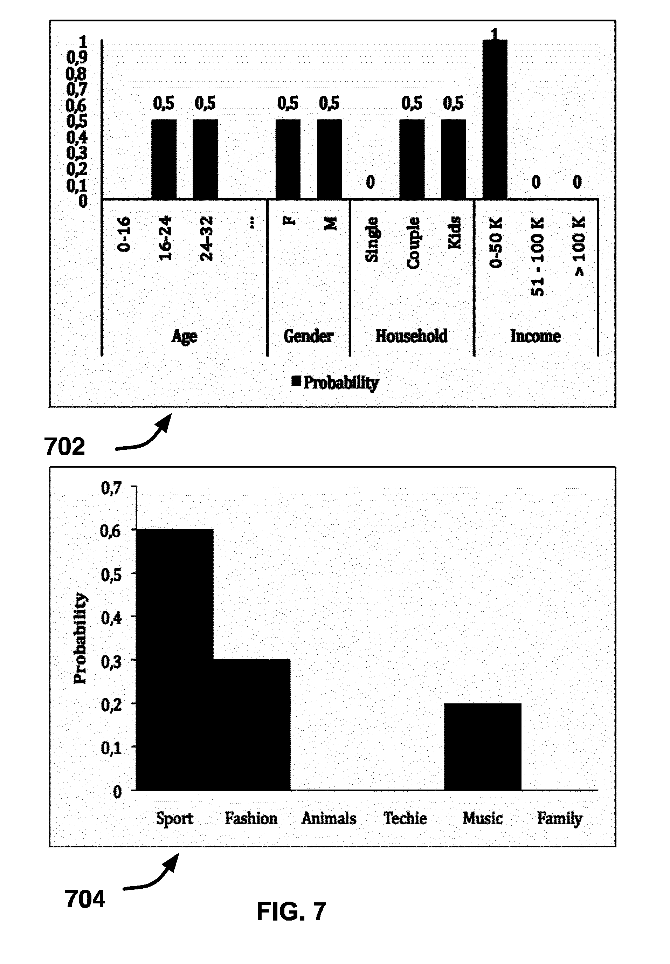

Figure 7 illustrates a location demographics vector 702 and a location behavior vector 704 as may be used to characterize consumers that visit a particular location. These vectors, location demographics 702 and location behavior 704, are collectively used to characterize a location and may be included in a location characterization (LC) or profile of a location. The LC profile may be used to improve a consumer profile, that includes both demographic and behavior information, associated with a particular mobile device. When a tracking device indicates that a particular mobile device visits a store. The LC profile of the store can be combined with the consumer profile associated with the mobile device to update information in the consumer profile. Conversely, the consumer profile can be used to update the LC profile. For example, if a location such as a store, an exhibition, or service, is developed for a market including people in the 16-24 year old and 24-32 year old age groups with no gender bias, living in households of 2-5 individuals, who have an income in the range of $20,000 to $50,000, a location demographics vector 702 as shown in Figure 7 might be associated with that location. Alternatively the location demographics vector 702 can be used to create a statistical estimate of the type of consumer likely to visit a particular location. Attributes of the likely consumer can be based on a statistical study, i.e. computed from, profiles of consumers who visit the location.

In certain embodiments the PDC, DDC, and BC vectors as well as the location characterization 702, 704, vectors have standardized formats in which each demographic characteristic and consumer behavior is identified by an indexed position. For example, the vectors may be singly indexed and thus represent coordinates in n-dimensional space, with each dimension representing a demographic or customer behavior characteristic. In this example a single value represents one probabilistic or deterministic value, for example the probability that a consumer is in the 16-24 year old age group, or the weighting of the age group. Alternatively, a group of demographic or consumer behaviors forms an individual vector. As an example, age categories can be considered a vector, with each component of the vector representing the probability that the consumer is in that age group. In this embodiment each vector can be considered to be a basis vector for the description of the consumer or location. The consumer or location characterization is then comprised of a finite set of vectors in a vector space that describes the consumer or location.

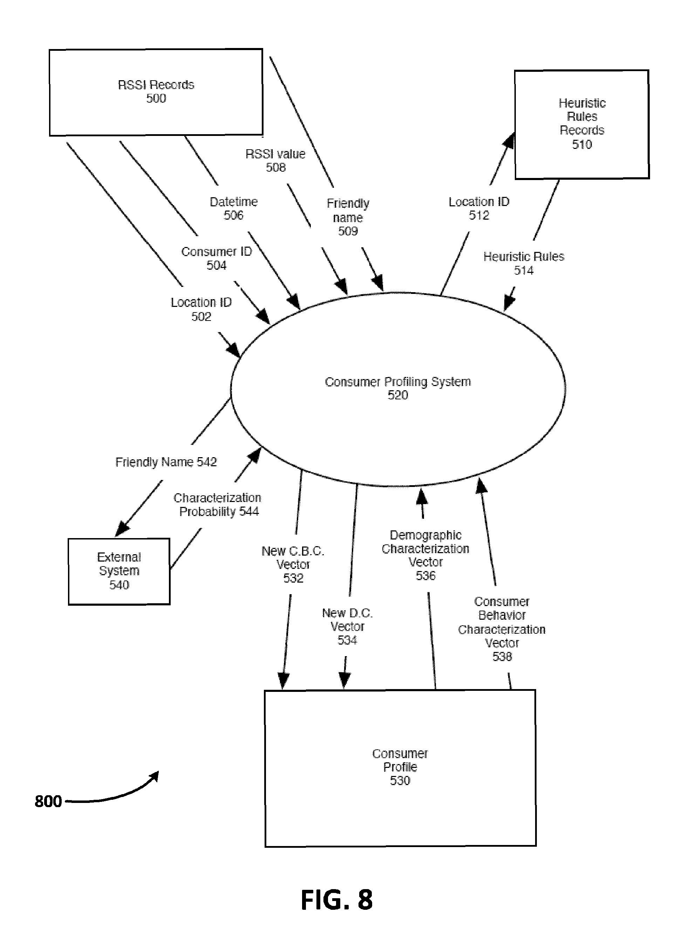

Figure 8 illustrates a context diagram 800 of a consumer profiling system 520 according to the disclosed embodiments. The context diagram 800 illustrates relationships between the consumer profiling system 520 and external entities interacting with the consumer profiling system 520. The system and methods disclosed herein can be realized using a variety of computer programming languages, such as for example C, C++, Smalltalk, java, Perl, etc., and/or can be developed as part of a relational database. Those skilled in the art will recognize that any programming language or method may be used without straying from the spirit and scope of the disclosed embodiments. The programs used to realize these methods can be executed on any general purpose computer that includes a processor and memory.

In the consumer profiling system 520 illustrated in the context diagram 800, RSSI records 500, such as the RSSI records transmitted from a tracking device 115, are received and stored on the consumer profile server 520. The consumer profiling system 520 may be implemented in program code executed on a consumer profile server 105. Heuristic rules 510 and consumer profiles 530 are similarly stored on a consumer profile server 105 or on a separate database server accessible by the profile server 105. The consumer profiling system 520 receives tracking information from a tracking device 115 or mobile device 120 contained in RSSI records 500. The information contained within a RSSI record 500 includes a consumer ID 504 representing the particular device or a consumer, a location ID 502 representing the location visited, the RSSI value 508 which represents the radio signal strength, and in accordance with local regulations may also receive the friendly name 509 of the tracking device 115 and/or mobile device 120. The consumer ID 504 is preferably a unique identifier associated with a consumer profile 530 and may also be uniquely associated with a particular consumer.

It is desirable to include the date and time 506 of an observation by transmitting them in the RSSI records 500 to the consumer profiling system 520. A recorded RSSI record 500 is also be referred to as an observation because it represents the radio signal strength observed by a particular device at a particular time. As used herein the term time, as well as the term datetime, refers to both a date and a time of day. A radio signal strength indication (RSSI) value 508 is included to indicate how strong the radio signal was when the observation was made. The RSSI value 508 can be used to infer information about the locations of the device, for example a strong signal may indicate the mobile device is close to the tracking device while a weak signal strength may indicate the mobile device is farther away from the tracking device. Also, multiple RSSI records can be used to improve the accuracy of a location, for example if three RSSI records are received from different tracking devices, the RSSI values 508 can be used to estimate where in relation to the three tracking devices the mobile device is actually located. The observation also contains a location ID 502 representing a unique identifier indicating the tracking device or location where the RSSI record was collected. A location ID can be as simple as a device ID of the tracking device that recorded the record, or alternatively it can be a full set of GPS coordinates, or some other value that can be used to uniquely identify the location of the observation. A tracking device ID typically has a predetermined accuracy of about 20 meters while GPS coordinates typically have an accuracy of about 2 meters. In alternate embodiments, a relational coordinate system may be used for the location ID 502, for example a super market may designate the north corner of the first floor as the origin of a local or relational coordinate system used to define actual locations of devices. Each tracking device 115 measures and collects RSSI records 500 from any mobile devices within range of the tracking device 115.

The profiling system 520 can use the received RSSI records 500 as detailed visit records directly or alternatively, the RSSI records 500 can be processed to create detailed visit records that contain additional information. For example, by combining several successive RSSI records from a single mobile device into a single detailed visit record, the profiling system 520 can add a dwell time field indicating the length of time the consumer spent in a particular store. When new RSSI records 500 are received, the consumer profiling system 520 can access an associated consumer profile 530 and/or a location characterization (LC) profile, illustrated as heuristic rules 514 in Figure 8, to update data in a consumer profile. Consumer profiling system 520 retrieves a consumer DC vector 536 and a consumer BC vector 538 from the consumer profile 530 along with a set of heuristic rules 514 describing the location. If a friendly name 509 or other consumer specific information is contained in the RSSI record 500, this consumer specific information such as friendly name 542 can be used to search in an external system 540 for additional characterizing information and probabilities related to the consumer 544. One or more data processing algorithms may then be applied to the DC 536 and BC 538 vectors to create updated DC 534 and BC 532 vectors which may be stored back into the consumer profile 530. These processing algorithms can use the characterization probabilities 544 obtained from an external system 540 along with the location characterization (LC) contained in the heuristic rules 510 to create the new DC vector 534 and BC vector 532.

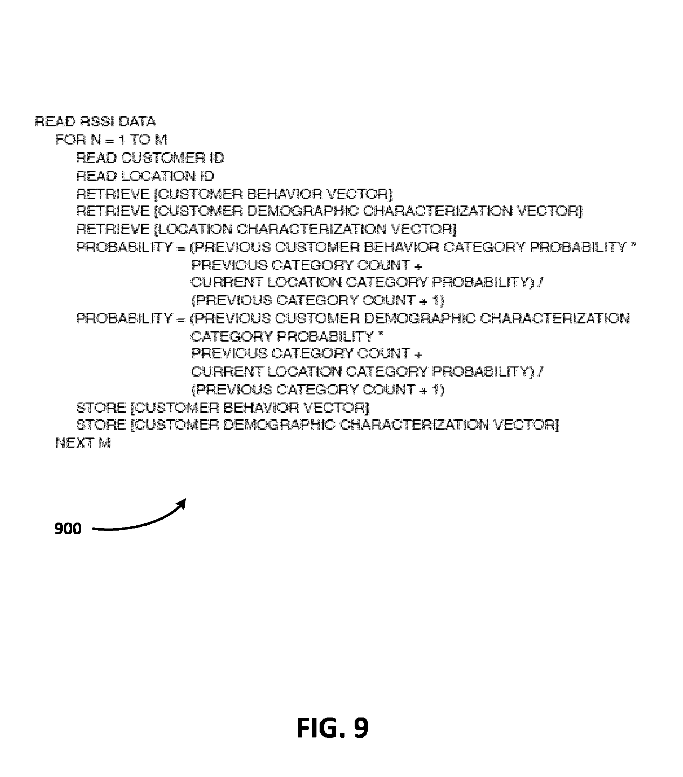

An embodiment of location based data processing algorithm as may be used in the consumer profiling system 520 is illustrated in the pseudocode 900 shown in Figure 9. The location based algorithm 900 may be used to apply LC information contained in the heuristic rules 510, to the consumer profile data to obtain a new BC vector 532 and a new DC vector 534. Note that the term customer is used interchangeably with the term consumer when describing embodiments of the disclosed algorithms and methods. The location based algorithm 900 begins by reading data from a RSSI record 500. The data includes a location ID 502 and a consumer ID 504. These IDs are then used to retrieve a customer BC vector 538 and a customer DC vector 536 from a consumer profile 530 along with an LC vector, in the form of heuristic rules 510, describing the location visited. The LC vector is then applied to the DC vector 536 and the BC vector 538. The location based algorithm 900 uses a probability value to weight the importance of the current location visit, as indicated by the location ID determined from the RSSI record 500 data, with respect to other previously recorded visits in a particular characterization category. In one embodiment, as illustrated in Figure 9, the updated behavior category probability is a function of the previous customer BC category probability, the current LC category probability, and the total number of visits to locations having the category, i.e. the category count. Similarly, the updated customer demographic probability is a function of the previous DC category probability, the current LC category probability, and the previous category count. The updated consumer BC vector 538 and the updated customer DC vector 536 are then stored back into the consumer profile 530. The location characterization category total may in certain embodiments be determined from a record containing the number of times a particular consumer 125 visits a location having the location category identified by the given location ID 512. Alternatively, other types of weighting factors such as applying statistical filtering techniques to the visit data may be used to update the DC vector 536. It may also be advantageous at times to have the consumer profiling system 500 reset, or clear, previous DC vectors 536 or other data contained in the consumer profile 530. The location based process 900 allows creation and maintenance of consumer demographic information and consumer behavior information without any specific knowledge about the particular consumer who is using the associated mobile device.

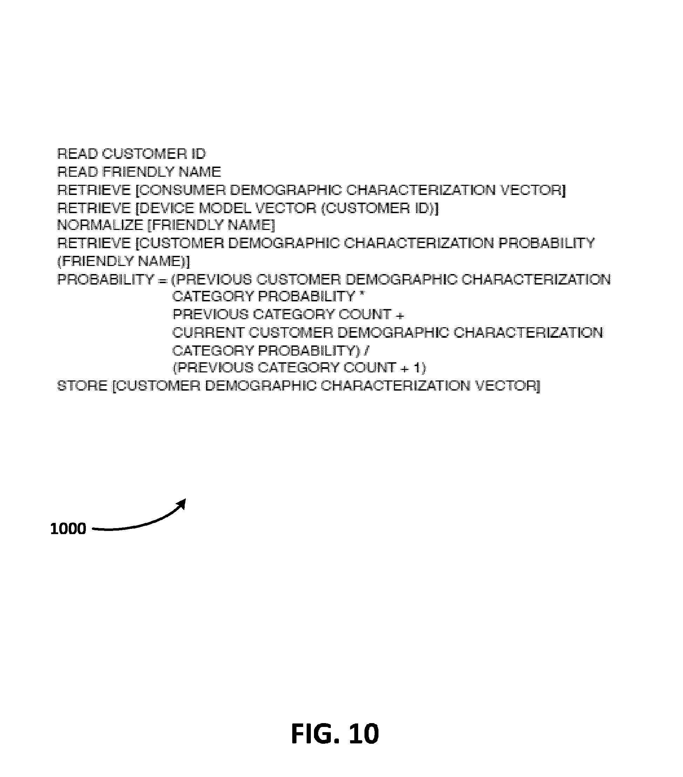

In certain embodiments, knowledge about the consumer may be obtained using a friendly name 509 included in the RSSI record. Figure 10 illustrates pseudocode for a friendly name 509 based algorithm 1100 that may be used to update a consumer DC vector 536 for a particular consumer. The algorithm 1000 reads the customer ID then reads the friendly name from a RSSI record 500. These values are then used to retrieve a consumer DC vector from a consumer profile 530. A device model vector is then retrieved using the customer ID and the model vector is normalized with the friendly name from the RSSI record. An external system 540 can then be used to retrieve additional customer demographic characterization and probability information using the normalized friendly name 542. Probability values in the consumer DC vector 534 are then updated using probability information obtained from the external system 540. The new customer DC vector is then stored back into the consumer profile 530.

In certain embodiments the above described friendly name process 1000 may use a publicly available search service such as an internet based search service, to determine if the friendly name contains a mobile phone model number. Further, if the consumer ID is a BLUETOOTH MAC address, the MAC address can be used to determine mobile device information including the model number. It is also possible to attempt determination of other consumer identifying information from the friendly name such as the consumer's gender or full name.

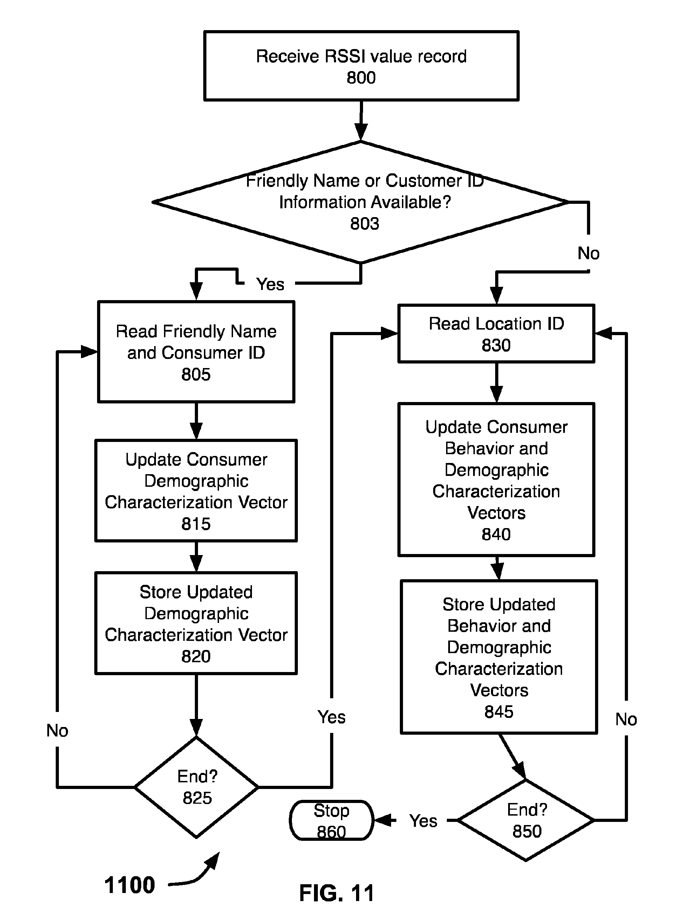

Referring now to Figure 11 there can be seen a flowchart illustrating a method 1100 for updating the consumer DC vector 536 and consumer BC vector 538. The method 1100 may be implemented by a consumer profiling system 520 running on a consumer profiling server 102. The method receives an RSSI value record 800, such as for example the RSSI record 500 described with reference to Figure 8 above, and checks 803 to see if there is friendly name or customer ID information is available in the received RSSI value record. If friendly name or customer ID is available, then the "yes" branch is followed where a friendly name algorithm, such as the friendly name process 1000 described above, is used to update the DC vector. If no friendly name or consumer ID is available, the method 1100 follows the "NO" branch which will be discussed further below. Continuing with the friendly name process on the "YES" branch, any customer identifying information is read 805. This friendly name and customer ID is then used to update the consumer demographic characterization vector 815, and the updated consumer demographic characterization vector is stored 820, for example by using a relational database program to store the data on a non-volatile computer readable medium such as a magnetic disk. Any suitable algorithm, such as the friendly name algorithm illustrated in the pseudocode 1100, may be used to update the consumer DC vector. As described above, the consumer identifying information, such as friendly name, may be used to search external systems for information that can be used to improve the consumer DC information, and in certain embodiments more than one external system may be searched. When more than one external system is being searched, the method 1100 may loop at step 825 back to step 805 for each external system, and the consumer DC vector is updated with each set of search results.

Once consumer DC vector updates have been completed for all the external systems, the method 1100 moves on to update the consumer DC vector 536 and consumer BC vector 538 using location information contained in the RSSI value record received at step 800. The location based update process begins by determining a location ID 830. This determination may be as simple as reading the location ID 504 from the RSSI value record or the determination may be more sophisticated such as using the RSSI value and location ID 504 from several RSSI value records to improve the accuracy of the determination. Once the location ID is determined 830, the consumer DC and consumer BC vectors are updated 840. This update 840 can be done with any suitable algorithm such as for example the algorithm 900 illustrated in Figure 9. The updated consumer DC and consumer BC vectors are then stored 845 back into a consumer profile 530. The location based updating of the consumer DC and consumer BC vectors is repeated 850 until all location categories associated with the visited location have been processed. Once all appropriate information provided by the RSSI value record has been processed the method 1100 ends 860.

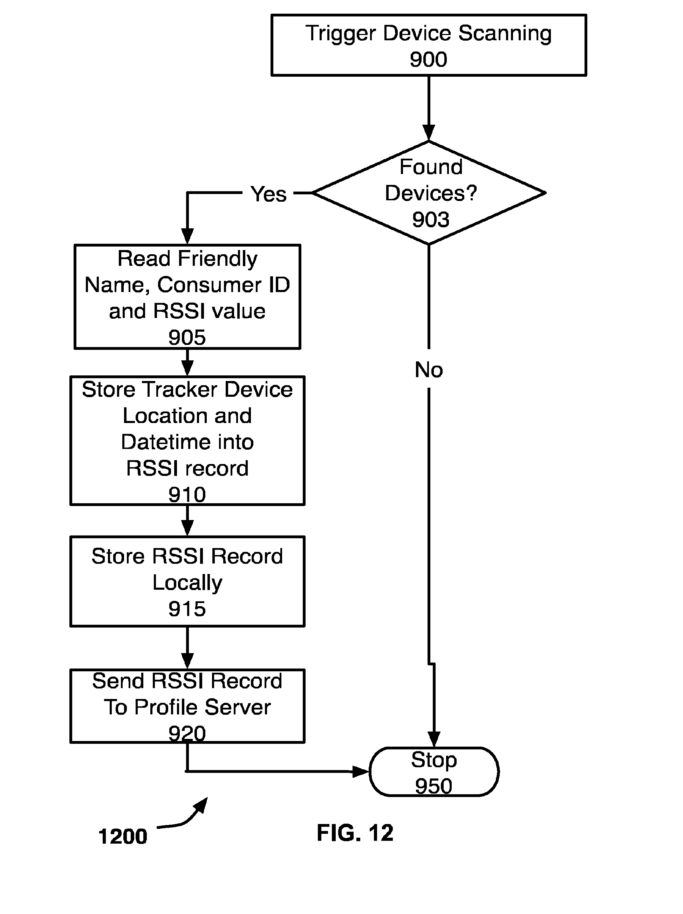

Figure 12 illustrates a flowchart for a device discovery process 1200 that may be used to provide RSSI records to a profile server 105. The discovery process 1200 begins when a tracking device, such as tracking device 115 described above, is triggered. The tracking device may be triggered in a variety of ways such as by a time interval or when a mobile device enters into a location. When the tracking device is triggered it scans for any devices within range 903. If devices are found the method proceeds along the "YES" branch where a RSSI record is constructed otherwise if no devices are found 903 the "NO' branch is followed and the discovery process 1200 ends 950. If a device is found 903 the "Yes" branch is taken the friendly name and customer ID are read along with a value indicating the radio signal strength 905. Next other useful information such as a store tracker device location and a datetime stamp is added to the RSSI record being constructed 910. The completed RSSI value record is then stored locally 915. Alternatively, the completed RSSI value record may be sent to the consumer profiling system 530 immediately instead of storing it locally. However, it is often advantageous to store RSSI records locally 915 before sending them to the consumer profiling server in order to optimize device resources such as batter life, data bandwidth, etc. After the RSSI record has been stored locally 915 it is sent to the profile server 920 where it can be used to update a consumer profile 530. Once the RSSI record is sent 920 the device discovery process 1200 ends 950.

In certain embodiments the methods and systems generate a profile of a consumer based on information about locations visited by a consumer where the visit information is gathered from visit records, also referred to herein as RSSI records. The visit records provide information about the location of a consumer's mobile device and are obtained from a tracking device which may be the mobile device itself or another device, such as a BLUETOOTH base station installed in a store. The method includes receiving visit records, retrieving location characterization information associated with locations in the detailed visit records, and generating a profile of the consumer based on the location characterization information. The location characterization information may include a set of heuristic rules defining a probabilistic measure of demographic and behavioral characteristics associated with a location. The profile of the consumer generated from the location characterization information includes a demographic profile and a behavioral profile of the consumer.

Alternatively, when reliable consumer profiles are available, the location characterization information may be updated using information contained in a consumer profile associated with the consumer who visited the location. This is desirable for example when a retail location is being evaluated for use by a particular type of retail store. By updating location characterization information based on consumers who have visited the location, an accurate demographic profile of the current consumers can be created. The location characterization information may be stored along with the consumer profiles using a relational database management program to store the data on computer readable media such as a computer disk or alternatively the location characterization information may be stored in a separate computer readable media.

It will be understood by those skilled in the art that the system and methods disclosed herein are not limited to RSSI records provided by BLUETOOTH devices. RSSI records created from other cellular networks, such as 2^{nd} generation, 3^{rd} generation, 4^{th} generation, LTE, etc. as well as other wireless local area networks (WLAN) and the like can be advantageously used in disclosed system and methods.

Thus, while there have been shown, described and pointed out, fundamental novel features of the invention as applied to the exemplary embodiments thereof, it will be understood that various omissions and substitutions and changes in the form and details of devices illustrated, and in their operation, may be made by those skilled in the art without departing from the spirit and scope of the invention. Moreover, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment. It is the intention, therefore, to be limited only as indicated by the scope of the claims appended hereto.

## Claims

1. A system for profiling a consumer, comprising:
an agent with a memory in communication with a processor, the memory including program instructions for execution by the processor to:
receive a visit record information element comprising information about a location visited by the consumer and a unique consumer identifier;
retrieve location information element associated with the location;
retrieve a consumer profile element associated with the unique consumer identifier;
generate an updated consumer profile information element based at least in part on one or more of the consumer profile information element, the detailed visit record information element, and the location characterization information element; and
store the updated consumer profile information element.

2. The system according to claim 1, wherein the memory further includes program instructions for execution by the processor to:
receive one or more RSSI records from a tracking device wherein the RSSI records comprise a location identifier, a unique consumer identifier, a radio signal strength indication value, and a date and time information element at which the radio signal strength indication value was recorded; and
generate a detailed visit record information element at least in part based on the one or more RSSI records.

3. The system according to claim 1 or 2, wherein the tracking device is a BLUETOOTH enabled device and the memory further includes program instructions for execution by the processor to: receive at least one of a MAC address and a friendly name as the RSSI records.

4. The system according to any preceding claim, wherein the memory further includes program instructions for execution by the processor to:
receive a demographic characterization vector associated with the consumer profile information element, wherein the demographic characterization vector comprises one or more fields, wherein each of the one or more fields represents an attribute of the consumer and each of the one or more fields is grouped into one of one or more demographic categories, and wherein each field comprises a value from zero to one wherein the value represents a probability that a consumer has the attribute represented by the one or more field.

5. The system according to any preceding claim wherein the demographic categories comprise one or more categories from the group comprising age, gender, income, and marital status.

6. The system according to any preceding claim, wherein the memory further includes program instructions for execution by the processor to:
receive a behavior characterization vector associated with the consumer profile, wherein the behavior characterization vector comprises fields where each field represents a particular consumer behavior and contains a probability value, wherein the probability value represents a probability that a consumer will exhibit the represented behavior.

7. The system according to any preceding claim, wherein the memory further includes program instructions for execution by the processor to:
receive a demographic characterization vector associated with the local characterization vector, wherein the demographic characterization vector comprises one or more fields, wherein each of the one or more fields represents an attribute of a consumer and each of the one or more fields is grouped into one of one or more demographic categories, and wherein each field comprises a value from zero to one wherein the value represents a probability that a consumer visiting the location associated with the location characterization information has the attribute represented by the one or more field.

8. The system according to any preceding claim, wherein the memory further includes program instructions for execution by the processor to:
receive a behavior characterization vector, the behavior characterization vector comprising the location characterization information, wherein the behavior characterization vector comprises fields where each field represents a particular consumer behavior and contains a probability value, wherein the probability value represents a probability that a consumer visiting the location associated with the location characterization information will exhibit the represented behavior.

9. The system according to any preceding claim, wherein the memory further includes program instructions for execution by the processor to generate an updated consumer profile using a location based algorithm to create an updated consumer profile from the retrieved consumer profile, the location characterization information and the detailed visit record.

10. A computer program product, comprising:
computer readable code means, the computer readable code means when executed in a processor device being configured to:
receive a detailed visit record information comprising information about a location visited by a consumer and a unique consumer identifier;
retrieve a consumer profile associated with the consumer;
retrieve a location characterization associated with the location;
generate an updated location characterization based at least in part on one or more of the consumer profile, the detailed visit record, and the location characterization; and
store the updated location characterization.

11. The computer program product according to claim 10, wherein the computer program code means when executed in a processor is further configured to:
receive one or more RSSI records from a tracking device wherein the RSSI records comprise a location identifier, a unique consumer identifier, a radio signal strength indication value, and a date and time at which the radio signal strength indication value was recorded; and
generate a detailed visit record at least in part based on the one or more RSSI records.

12. The computer program product of claim 10 or 11, wherein the tracking device is a BLUETOOTH enabled device and the RSSI records further comprise at least one of a MAC address and a friendly name.

13. The computer program product of any of claims 10 to 12, wherein the location characterization comprises a demographic characterization vector, and wherein the demographic characterization vector comprises one or more values where each value represents a probability that a consumer visiting the location associated with the location characterization has a particular attribute.

14. The computer program product of any of claims 10 to 13, wherein the consumer profile comprises a behavior characterization vector, and wherein the behavior characterization vector comprises one or more values where each value represents a probability that a consumer visiting the location associated with the location characterization will exhibit a particular behavior.

15. The computer program product of any of claims 10 to 14, wherein the computer readable code means when executed in a processor device is configured to generate an updated consumer profile, wherein generating the updated consumer profile comprises using an internet based search service to obtain demographic information associated with the detailed visit record, where the detailed visit record is a RSSI record including a MAC address and a friendly name, the obtained demographic information being used to generate the updated consumer profile.
